# EUROPÄISCHE PATENTANMELDUNG

(11) **EP 3 266 358 A1**
(43) Veröffentlichungstag der Anmeldung: **10.01.2018**
(21) Anmeldenummer: 17177281.7
(22) Anmeldetag: 22.06.2017
(51) Int. Cl.: A47L 15/00, A47L 15/23

(54) **GESCHIRRSPÜLER MIT SENSORENEINHEIT ZUR BESTIMMUNG EINER DREHBEWEGUNG EINES SPRÜHARMS**

(30) Priorität: 07.07.2016 DE 102016112441
(71) Anmelder: Sanhua AWECO Appliance Systems GmbH, 88099 Neukirch (DE)
(72) Erfinder: Wallerstorfer, Kurt, 5204 Strasswalchen (AT); Pleschinger, Andreas, 5205 Schleedorf (AT)
(74) Vertreter: Otten, Roth, Dobler & Partner mbB Patentanwälte

(57) **Zusammenfassung**

Es wird ein Geschirrspüler mit einem Arbeitsraum (2), mit wenigstens einem drehbar im Arbeitsraum (2) angeordneten Sprüharm (5, 6) und mit einer Dosiervorrichtung (9) zur Zufuhr und Dosierung eines Stoffes wie Reiniger, Klarspüler, usw. in den Arbeitsraum (2), wobei die Dosiervorrichtung (9) als Einsatzteil (9) mit einem Gehäuse (20, 21) zum Einsetzen in eine Ausnehmung einer Innenwand (7) des Arbeitsraums (2), beispielsweise in der Tür (7) des Arbeitsraums (2), ausgebildet ist, und mit einer Sensoreinheit (27, 28) zur Erkennung einer Sprüharmbewegung im Arbeitsraum (2) des Geschirrspülers, die wenigstens teilweise in einem Gehäuse (20, 21) der Dosiervorrichtung (6) angeordnet ist, vorgeschlagen, wobei der Geschirrspüler eine verbesserte Programmsteuerung aufweist. Dies wird erfindungsgemäß dadurch erreicht, dass wenigstens eine Einlassöffnung (17) eines Innenraums (22) der Dosiervorrichtung (9) während der Drehung des Sprüharms (5, 6) wenigstens teilweise im Wasser-/ Flüssigkeitsstrahl (23) einer Sprühdüse (24) des Sprüharms (5, 6) angeordnet ist, wobei die Sensoreinheit (27, 28) wenigstens teilweise im/am Innenraum (22) und/oder an einer Wand des Innenraums (22) angeordnet ist.

## Beschreibung

Die Erfindung betrifft einen Geschirrspüler mit einem Arbeitsraum und einem Sensor nach dem Oberbegriff des Anspruchs 1.

Ein derartiger Geschirrspüler ist beispielsweise in der Druckschrift DE 100 34 546 A1 beschrieben. Bei diesem Gegenstand nach dem Stand der Technik wird der Innenraum eines Geschirrspülers mittels eines oder mehrerer Radarsensoren unter Nutzung des Doppler-Effektes überwacht. Diese Sensorik ist sehr aufwendig und dementsprechend kostenträchtig. Darüber hinaus konnte bislang keine technisch einwandfreie Funktion eines solchen Geschirrspülers verwirklicht werden.

Aufgabe der Erfindung ist es, ausgehend von einem Geschirrspüler gemäß dem Oberbegriff des Anspruchs 1, einen Geschirrspüler mit einer verbesserten Programmsteuerung vorzuschlagen.

Diese Aufgabe wird, ausgehend von einem Geschirrspüler der einleitend genannten Art, durch die Merkmale des Anspruchs 1 gelöst. Durch die in den Unteransprüchen genannten Maßnahmen sind vorteilhafte Ausführungen und Weiterbildungen der Erfindung möglich.

Dementsprechend zeichnet sich ein erfindungsgemäßer Geschirrspüler mit einer Sensoreinheit zur Erkennung einer Sprüharmbewegung im Arbeitsraum dadurch aus, dass wenigstens eine Einlassöffnung eines Innenraums des Gehäuses und/oder der Dosiervorrichtung während der Drehung des Sprüharms wenigstens teilweise im Wasser-/Flüssigkeitsstrahl einer Sprühdüse des Sprüharms angeordnet ist, wobei die Sensoreinheit wenigstens teilweise im/am Innenraum und/oder an einer Wand des Innenraums angeordnet ist.

Mit Hilfe einer erfindungsgemäßen Sensoreinheit ist es möglich, Programmabläufe während des Betriebs zu kontrollieren. Insbesondere kann damit erfasst werden, ob der Sprüharm und/oder welcher Sprüharm ordnungsgemäß rotiert oder ein Fehlverhalten aufweist.

Die erfindungsgemäße Anordnung der Sensoreinheit und/oder dessen sensitiven Sensorfläche/-element "hinter" der Einlassöffnung des Innenraumes des Gehäuses und/oder der Dosiervorrichtung wird erreicht, dass im Wesentlichen bzw. zumindest zum Großteil Wasser/Flüssigkeit/Lauge des Wasser-/Flüssigkeitsstrahls der Sprühdüse des Sprüharms zur Sensoreinheit und/oder dessen sensitiven Sensorfläche/-element gelangt. Am Gehäuse und/oder an der Dosiervorrichtung ablaufendes Wasser und/oder indirektes, umherspritzendes bzw. von Geschirr umgelenktes/reflektiertes Wasser gelangt durch die erfindungsgemäße Anordnung der Sensoreinheit und/oder dessen sensitiven Sensorfläche/-element im/am Innenraum bzw. dessen Wand nicht oder nur zu einem sehr geringen Teil zur Sensoreinheit und/oder zu dessen sensitiven Sensorfläche/Sensorelement. Hiermit kann ein verwertbares Sensorsignal generiert werden, das in vorteilhafter Weise bei jeder Umdrehung des Sprüharmes eine deutliche Veränderung aufweist.

So wird z.B. bei den üblicherweise in der Praxis eingesetzten, um eine Drehachse rotierenden, zwei-armigen Sprüharmen mit je einer oder mehrerer Sprühdüsen, insb. im Endabschnitt des Sprüharms angeordnet, je halber Umdrehung ein Wasser-/ Flüssigkeitsstrahl der Sprühdüse des Sprüharms durch die erfindungsgemäße Einlassöffnung des Innenraumes in den Innenraum gemäß der Erfindung eindringen und zur Sensoreinheit und/oder dessen sensitiven Sensorfläche/-element gelangen/strömen und ein vorteilhaft auswertbares Sensorsignal bzw. eine signifikante/auswertbare Signaländerung der Sensoreinheit und/oder dessen Sensorelement generieren.

In einem normalen bzw. störungsfreien Betrieb ist gemäß der Erfindung ein periodisches Signal bzw. eine periodische Signaländerung vorhanden/detektierbar. Dagegen ist bei einer Störung, z.B. Sprühdüse verstopft/beeinträchtigt, Drehung/Rotation des Sprüharms beeinträchtigt, insb. durch unsachgemäße Lagerung von Geschirr im Bereich/Weg des drehenden Sprüharmes, etc., das Signal bzw. die Signaländerung nicht oder nur zum Teil vorhanden und/oder nicht-periodisch bzw. mit (ggf. zusätzlichen) Störsignalen/-änderungen ausgebildet. Dies kann u.a. mit Hilfe einer vorteilhaften Kontroll- und/oder Auswerteeinheit zur Kontrolle/Steuerung sowie in vorteilhafter Weise z.B. zur optischen und/oder akustischen Signalisierung bzw. verbesserten Programmsteuerung des Geschirrspülers verwendet werden. Hiermit kann eine Bedienperson aufgefordert werden/sein, den/die Sprüharme bzgl. ordnungsgemäßem Zustand zu prüfen.

Auch kann in einer besonderen Variante der Erfindung z.B. eine (kurzzeitige) Erhöhung des Pumpendruckes bzw. des Drucks des Wasser-/Flüssigkeitsstrahls des Sprüharms zur Beseitigung der Sprühdüsenverstopfung bzw. zur "Reinigung" der Sprühdüse vorgesehen werden, so dass vom Geschirrspüler gemäß der Erfindung ein (weitgehend) selbsttätiges Beseitigen der erfassten/festgestellten Störung/Beeinträchtigung realisiert werden kann. Ein Eingreifen einer Bedienperson ist somit ggf. nicht zwingend notwendig. Dies erhöht in erheblichem Maß die Betriebssicherheit des Geschirrspülers gemäß der Erfindung und den Komfort für die Nutzer/Bedienpersonen.

Die Sensoreinheit ist wenigstens teilweise in dem Gehäuse der als Einsatzteil ausgebildeten Vorrichtung angeordnet, die zur Zufuhr und Dosierung eines Arbeitsstoffes wie eines Reinigers, Klarspülers usw. dient.

Im Sinn der Erfindung wird eine solche Vorrichtung als Dosiervorrichtung bezeichnet. Weiterhin werden die Begriffe "Spülmaschine", "Geschirrspülmaschine" oder "Geschirrspüler" vorliegend ebenso als synonyme Begriffe verwendet wie die Begriffe "Wasserstrahl", "Flüssigkeitsstrahl" und "Laugenstrahl".

Der Innenraum ist im Sinn der Erfindung im Wesentlichen als Hohlraum, Kanal, leerer/luftgefüllter Raum innerhalb der Kontur/Hüllfläche des Gehäuses und/oder der Dosiervorrichtung ausgebildet. Hierbei ermöglicht die vorteilhafte Einlassöffnung das Einströmen/Eindringen des Wasser-/ Flüssigkeitsstrahls in den sich innerhalb der Kontur des Gehäuses und/oder der Dosiervorrichtung befindlichen/angeordneten Innenraums gemäß der Erfindung. Der Innenraum bildet in vorteilhafter Weise einen Schutzraum bzw. einen etwas abgeschirmten Raum/Bereich, in dem die Sensoreinheit und/oder dessen sensitive Sensorfläche bzw. das Sensorelement zumindest teilweise geschützt/abgeschirmt ist, vor allem vor (indirektem) Spritzwasser oder nicht direkt/unmittelbar vom Wasser-/ Flüssigkeitsstrahl der Sprühdüse des Sprüharms kommender/fliegender Flüssigkeit, d.h. an einer Wandung des Arbeitsraumes ablaufende Flüssigkeit bzw. von Geschirr abgelenkte Flüssigkeit, etc..

In einer bevorzugten Ausführungsform der Erfindung weist der Innenraum wenigstens eine Ablauföffnung zum Ablaufen/Ausströmen des/der Wassers/Flüssigkeit auf. Hiermit kann das durch die Einströmöffnung in den Innenraum gemäß der Erfindung eindringende Wasser/Flüssigkeit in vorteilhafter Weise wieder aus dem Innenraum abfließen bzw. entfernt werden. Somit kann in einer Entleerungsphase/-zeitdauer bis zum nächsten Einströmen/Eindringen von Wasser/Flüssigkeit (in einer Einström-/Auffüllphase) von der (nächsten) Sprühdüse des Sprüharms, d.h. üblicherweise nach einer halben Umdrehung von der Sprühdüse des zweiten Arms des Sprüharms, aufgestautes Wasser/Flüssigkeit bzw. die im Innenraum vorhandene Menge an Wasser/Flüssigkeit verringert bzw. im Wesentlichen beseitigt/entfernt werden. Diese (deutliche/ausgeprägte) Änderung der Menge/Füllhöhe an Wasser/Flüssigkeit im Innenraum gemäß der Erfindung kann sensorisch bzw. mittels der Sensoreinheit und/oder dessen sensitiven Sensorfläche/-element in vorteilhafter Weise erfasst und zur vorteilhaften Programmsteuerung verwendet werden.

Zudem wird mit der Ablauföffnung des Innenraumes gemäß der Erfindung der konstruktive und wirtschaftliche Aufwand im Vergleich zu einer ansonsten vorzusehenden aktiven Entleerung, z.B. mittels einem Abpumpen durch eine elektrische Pumpe, in vorteilhafter Weise reduziert.

Generell kann der Innenraum mit Einströmöffnung und Ablauföffnung beispielsweise mittels spritzgegossenem Kunststoff oder dergleichen wirtschaftlich günstig hergestellt werden. So können ggf. zwei oder mehr Wandteile des Innenraums spritzgegossen und thermisch oder mittels Klebstoff miteinander verbunden bzw. verschweißt werden. Dies ermöglicht eine vorteilhafte Ausbildung des Innenraums als Hohlraum, Kanal, Röhre, Trichter, Auffangwanne oder dergleichen.

Es ist von Vorteil, das Aufstauen bzw. die Füllhöhe/Menge an Wasser/Flüssigkeit im Innenraum und/oder die Zeitdauer/Länge der Entleerung bzw. Entleerungsphase einzustellen bzw. festzulegen. So kann sichergestellt bzw. festgelegt werden, dass einerseits genügend Wasser/Flüssigkeit aufgestaut bzw. eine vorteilhafte Füllhöhe/Menge im Innenraum (zwischen-) gespeichert wird, insb. durch eine relativ große bzw. definierte (lichte) Querschnittsfläche der Einlassöffnung, und/oder andererseits bis zum nächsten Einströmen/Eindringen von Wasser/Flüssigkeit (in einer Einström-/Auffüllphase) der Innenraum möglichst leer bzw. weitgehend entleert ist. Dies verbessert die Erfassbarkeit eines vorteilhaften (periodischen) Sensorsignals.

Vorteilhafterweise weist die Ablauföffnung wenigstens eine Drosselvorrichtung zum Aufstauen und/oder Drosseln des/der Wassers/Flüssigkeit im Innenraum auf. Hiermit kann das Anstauen bzw. Verweilen/Zwischenspeichern des Wassers bzw. der Flüssigkeit im Innenraum in vorteilhafter Weise eingestellt/beeinflusst werden. So kann ein aktives Drosselelement wie ein Drossel-/Sperrventil oder dergleichen und/oder ein passives Drosselelement wie z.B. eine Engstelle bzw. Verengung/Verjüngung des (lichten) Querschnitts des Innenraumes gemäß der Erfindung vorgesehen werden. Letzteres weist einen besonders geringen konstruktiven und wirtschaftlichen Aufwand auf und bildet in vorteilhafter Weise den Innenraum im Wesentlichen als Trichter aus, der selbsttätig (verzögert) ausläuft.

Vorzugsweise umfasst die Sensoreinheit wenigstens einen Leitwertsensor zur Erfassung eines Leitwertes des/der Wasser-/ Flüssigkeit. Mit dem Leitwertsensor kann das Vorhandensein und das Nicht-Vorhandensein von Wasser/Flüssigkeit in vorteilhafter Weise erfasst werden. Gerade durch die Verwendung von Reiniger, Klarspüler etc. als Betriebsmittel des Geschirrspülers wird eine deutliche/signifikante Änderung des Leitwertes erfassbar, insb. eine verbesserte elektrische bzw. niederohmige Leitung bei einer Lauge u.a. bei Verwendung sog. "Tabs". Das heißt, dass das aufgestaute/zwischengespeicherte Wasser im Innenraum im Vergleich zum (teil-)entleerten Innenraum zu einer Änderung des Signals des Leitwertsensors führt und im Sinn der Erfindung verwendet/ausgewertet werden kann.

In einer vorteilhaften Variante der Erfindung umfasst die Sensoreinheit wenigstens einen Drucksensor zur Erfassung eines Wasser-/Flüssigkeitsdruckes, insb. im Innenraum. So können z.B. wenigstens ein Dehnmesstreifen, ein Piezosensor, ein eine auf Druck sensitive flexible Membran umfassender Sensor oder dergleichen verwendet werden. Hiermit kann eine vorteilhafte elektronische Signalverwertung/-auswertung verwirklicht werden.

Vorteilhafterweise umfasst die Sensoreinheit wenigstens eine optische Sensorvorrichtung zur Erfassung des/der Wassers/ Flüssigkeit. Hierbei kann das Vorhandensein bzw. Nicht-Vorhandensein von Wasser/Flüssigkeit im Innenraum gemäß der Erfindung u.a. durch eine Änderung/Beeinflussung des optischen Weges/Strahlenganges des Lichtes realisiert werden. Dies kann z.B. durch eine Änderung der Brechung, Beugung und/oder Reflektion des Lichtes umgesetzt werden.

Beispielsweise ist eine Lichtschranke oder dergleichen vorgesehen, wobei Sender und Empfänger auf einer gemeinsamen Seite oder auf gegenüberliegenden Seiten des Innenraumes bzw. dessen Wand angeordnet sind. Bei der Anordnung von Sender und Empfänger auf einer gemeinsamen Seite ist eine vorteilhafte Reflexion des Lichtes auf der gegenüberliegenden Seite des Innenraumes bzw. dessen Wand vorzusehen. Für die Reflexion kann ein vorteilhaftes Reflexionselement, insb. eine Reflexionsschicht auf/an der Wand vorgesehen werden. Hierbei ist in vorteilhafter Weise keine aktive Elektronik zwingend notwendig, was diese Ausführung besonders günstig macht.

Beispielsweise kann ein Sender (und Empfänger) von sichtbarem Licht vorgesehen werden, insb. eine Leuchtdiode (LED). Eine LED benötigt wenig Bauraum und ist vorteilhaft in/auf einer ggf. bereits vorhandenen Leiterplatte bzw. Platine anordenbar, insb. in/auf einer Leiterplatte einer elektronischen/elektrischen Kontrolleinheit der Dosiervorrichtung.

In einer besonderen Variante der Erfindung umfasst die (optische) Sensoreinheit wenigstens einen Infrarotsender und/oder einen Infrarotempfänger. Vorzugsweise sind der Infrarotsender und/oder der Infrarotempfänger im Innenraum und/oder an der Wand des Innenraums angeordnet. Beispielsweise ist eine IR-LED als Infrarotsender ausgebildet. Eine IR-LED (Infrarot-Leuchtdiode) benötigt wenig Bauraum und ist vorteilhaft in/auf einer Leiterplatte bzw. Platine anordenbar, insb. in/auf einer Leiterplatte einer elektronischen/elektrischen Kontrolleinheit der Dosiervorrichtung.

Die Dosiervorrichtung und/oder die Wand des Innenraums ist bevorzugt wenigstens teilweise aus Kunststoff hergestellt, insb. im Spritzgussverfahren hergestellt. Einige handelsübliche Kunststoffe sind zwar nicht für sichtbares Licht, jedoch für IR-Licht durchlässig. So kann in vorteilhafter Weise ein für IR-Licht durchlässiger Kunststoff für die Dosiervorrichtung und/oder die Wand des Innenraums verwendet werden, so dass z.B. "hinter" bzw. an der wasser-/ flüssigkeitsgeschützten bzw. "trockenen" Seite der Dosiervorrichtung und/oder Wand des Innenraums die Sensoreinheit bzw. der Infrarotsender und/oder der Infrarotempfänger angeordnet werden kann. Hiermit kann ohne großen Aufwand und zudem absolut wasser-/flüssigkeitsgeschützt bzw. abgedichtet vor dem Wasser bzw. der Lauge des Arbeitsraumes die Sensoreinheit bzw. der Infrarotsender und/oder der Infrarotempfänger angeordnet werden. Dies reduziert den Herstellungsaufwand und gewährleistet eine hohe Betriebssicherheit.

Durch die Verwendung von Infrarotlicht ist eine zuverlässige und auch unter den Umgebungsbedingungen im Arbeitsraum einer Geschirrspülmaschine bzw. im Innenraum der Dosiervorrichtung während des Betriebs weitgehend störungsfreie Erfassung, insbesondere der Bewegung des Sprüharms möglich.

Das Funktionsprinzip dieser IR-Sensoreinheit basiert dabei darauf, dass Infrarotlicht von einem Infrarotsender abgestrahlt und von einem Infrarotempfänger wieder detektiert wird. Hierbei kann das Infrarotlicht u.a. vom Wasser bzw. der Flüssigkeit und/oder an einer gegenüber angeordneten Seite der Wand des Innenraums reflektiert werden. Auch kann der Empfänger an einer gegenüber angeordneten Seite der Wand des Innenraums angeordnet werden.

In einer besonderen Ausführungsform der Erfindung wird eine zuverlässig detektierbare Reflexion des Infrarotlichts dadurch erreicht, dass die erfindungsgemäß gewünschten Reflexionen dabei durch das Wasser bzw. die Lauge hervorgerufen werden.

In einer anderen ebenfalls vorteilhaften Ausführungsform der Erfindung wird die gewünschte Reflexion an der Wand des Innenraumes realisiert. Hierzu kann die Anordnung und Oberflächengestaltung der Wand entsprechend vorgesehen werden. So kann beispielsweise wenigstens bereichsweise eine für Infrarotlicht gut reflektierende Beschichtung vorgesehen und/oder ein vorteilhaftes Reflexionselement an der Wand des Innenraumes angeordnet werden.

In einer weiteren vorteilhaften Ausführungsform der Erfindung wird die Wand mit einem speziellen Reflektor für Infrarotlicht ausgestattet. Derartige Reflektoren können durch Spiegelflächen und/oder durch Lichtbrechung gegebenenfalls unter zusätzlicher Verwendung optischer Elemente so ausgestaltet werden, dass einfallendes Infrarotlicht zielgerichtet reflektiert wird. Im sichtbaren Bereich sind derartige Reflektoren auch unter dem Begriff "Katzenauge" oder "Lüneburg-Linse" bekannt.

Mit derartigen Reflektoren kann insbesondere auch ein Reflexionswinkel vorgesehen werden, der die relative Anordnung des Infrarotempfängers in Bezug zum Infrarotsender berücksichtigt.

Vorteilhafterweise wird das Gehäuse der Dosiervorrichtung, das die Sensoreinheit beinhaltet, wasserdicht ausgeführt. Die Unterbringung der Sensoreinheit im Gehäuse der ohnehin vorhandenen Dosierungsvorrichtung erleichtert dabei die Anordnung im Innern des Arbeitsraums der Spülmaschine. Zum einen muss hierdurch keine zusätzliche Öffnung in der Innenwand bzw. der Tür des Arbeitsraums vorgesehen werden, da die Dosiervorrichtung ohnehin in einer solchen Ausnehmung der Innenwand anzuordnen ist. Zum andern ist bereits bei den bekannten Dosiervorrichtungen das Gehäuse wasser- und laugendicht ausgebildet. Sämtliche elektrischen Steuerorgane auch für die Dosiervorrichtung, die sich im Innern der Geschirrspülmaschinentür befinden, sind bereits nach dem Stand der Technik durch die Ausgestaltung des Gehäuses vor dem Wasser bzw. der Spüllauge geschützt.

Somit kann eine Sensoreinheit ohne größere Dichtprobleme in vorteilhafter Weise innerhalb einer solchen Dosiervorrichtung untergebracht werden, wobei beispielsweise die erfindungsgemäße Einlassöffnung im Gehäuse vorgesehen wird. Eine solche Einlassöffnung im Gehäuse bzw. der Innenraum gemäß der Erfindung ist einfach durch vorteilhafte Dichtungen oder auch durch eine Anformung/Spritzgießen und/oder eine feste Verbindung, beispielsweise durch Verschweißen oder Verkleben, zuverlässig dicht mit der (restlichen) Gehäusewandung der Dosiervorrichtung zu realisieren.

In einer vorteilhaften Ausführungsform der Erfindung weist das Gehäuse der Dosiervorrichtung Leitelemente auf, um den Innenraum und/oder die Sensoreinheit wenigstens teilweise von vom Gehäuse abrinnendem Wasser freizuhalten, bzw. wird weiterhin die zusätzliche Anordnung von Leitelementen vorgesehen, um abrinnendes Wasser nach dem Durchlauf des Sprüharms von der Einlassöffnung fernzuhalten. Durch herabrinnendes Wasser könnte eine Störung bzw. ein nachteiliges Einströmen von Wasser/Flüssigkeit, das/die nicht direkt vom Sprüharm kommt/stammt, verursacht werden, was unerwünschte Störsignale generieren könnte.

Durch Leitelemente, beispielsweise in Form eines Vordaches oberhalb der Einlassöffnung des Innenraumes, kann dafür gesorgt werden, dass an der Wandung des Arbeitsraumes wie z.B. an der Tür herabrinnendes Wasser seitlich um die Einlassöffnung und/oder um den Innenraum herumgeleitet wird. Dies erhöht die Betriebssicherheit des Geschirrspülers.

In einer vorteilhaften Ausführungsform der Erfindung werden derartige Leitelemente an der Innenwand des Arbeitsraums und/oder an der Tür und/oder im Wesentlichen über die gesamte Breite am Gehäuse vorgesehen, womit ggf. sogar die gesamte Vorrichtung vor herabrinnendem Wasser und somit auch der Innenraum vor unerwünschtem Wasser bzw. Einströmen geschützt wird.

Vorzugsweise ist die Sensoreinheit so angeordnet, dass sie nicht unmittelbar in einem Wasser-/ Flüssigkeitsstrahl einer Sprüharmdüse liegt. Auch hierdurch werden Störsignale durch unerwünschte Wasser-/Flüssigkeitsansammlungen vermieden.

In einer besonderen Ausführungsform der Erfindung wird der Zeitablauf des Sensorsignals erfasst und eine Auswerteeinheit vorgesehen, um die Periodizität bzw. Frequenz des vom drehenden Sprüharm hervorgerufenen Sensorsignals zu erfassen.

Da erfindungsgemäß die Drehbewegung des Sprüharms zu überwachen ist, kann von einem periodischen oder frequenzabhängigen Signal ausgegangen werden. Durch die zeitliche Erfassung der Sensorsignale mit anschließender Auswertung in einer elektronischen Auswerteeinheit können somit die erfassten Sensorsignale (über eine bestimmte bzw. vorgegebene Zeitdauer) selektiv nach periodischen Signalen bzw. Signalanteilen untersucht und/oder ausgewertet werden. Durch diese Maßnahme können in vorteilhafter Weise nahezu alle nicht-periodisch auftretenden Störsignale (bereits) gefiltert bzw. unterdrückt werden.

Durch Bestimmung der Frequenz kann in vorteilhafter Weise die Drehzahl bzw. Geschwindigkeit des Sprüharms bestimmt werden. Bei Bedarf kann eine Kontrolle/Steuerung/Anpassung der Drehzahl bzw. Geschwindigkeit des Sprüharms, z.B. über den Druck des/der den/die Sprüharme beaufschlagenden Wassers/Flüssigkeit, realisiert werden. Sollte kein periodisches Signal detektierbar sein, so ist dies ein Zeichen für einen stillstehenden, zumindest jedoch für einen nicht freidrehenden Sprüharm.

Im Falle einer solchen Fehlfunktion des Sprüharms kann dies beispielsweise zur Anzeige für eine Bedienperson gebracht werden oder aber auch in die Steuerung des Programmablaufs eingegriffen werden.

In einer besonderen Ausführungsform der Erfindung wird eine analoge Auswerteschaltung vorgesehen, um die Periodizität bzw. Frequenz des vom drehenden Sprüharm hervorgerufenen Sensorsignals zu detektieren. Eine solche Schaltung kann beispielsweise unter Verwendung eines sogenannten PPL (phase lock loop) realisiert werden. So kann ein oszillierendes Eingangssignal in einem Komparator oder Differenzenverstärker mit dem Sensorsignal verglichen werden und Änderungen der Ausgangsspannung zu Rückschlüssen auf eine ordnungsgemäße Rotation eines Sprüharms herangezogen werden. Auch wenn technisch zur Auswertung eines erfindungsgemäßen Sensorsignals digitale Bauelemente ohne weiteres zur Verfügung stehen, kann der Einsatz einer analogen Schaltung unter Kostengesichtspunkten bei entsprechenden Stückzahlen die technisch vorteilhaftere Lösung bieten. Auch die Kombination einer analogen Schaltung mit einer digitalen Auswertung, die z.B. nur bei fehlerhafter Ausgangsspannung der analogen Schaltung eingreift, wäre denkbar.

Im Fall einer digitalen Auswerteeinheit können weiterhin verschiedene Algorithmen vorgesehen werden, um Störeinflüsse zu analysieren und auszuschließen. Anstelle oder in Kombination zu der Verwendung der Periodizität wie oben angeführt kann beispielsweise auch eine Integration der Signalpeaks, das heißt die Bestimmung der durch das Signal abgedeckten Fläche zur Erkennung und zum Ausschluss von Fehlerpeaks herangezogen werden. Hiermit können Fehlersignale erkannt und ausgeschlossen werden, die nicht dem Zeitablauf und der Intensität der durch den Sprüharm bzw. dem Wasser- oder Laugenstrahl erzeugten Signale folgen. Auch eine Schwellwertanalyse kann anstelle oder zusätzlich zu anderen Methoden der Fehlererkennung eingesetzt werden.

Ein Ausführungsbeispiel der Erfindung ist in der Zeichnung dargestellt und wird anhand der Figuren nachfolgend näher erläutert.

Im Einzelnen zeigt:
- Figur 1: einen schematischen Querschnitt durch eine Spülmaschine mit Sprüharm,
- Figur 2: eine schematische Draufsicht auf die Türinnenseite einer Spülmaschine,
- Figur 3: eine schematische Darstellung einer Dosiervorrichtung im Querschnitt mit Sprüharm und
- Figur 4: ein schematisches Beispiel für ein Sensorsignal, das mittels Wasserstausensor generierbar ist.

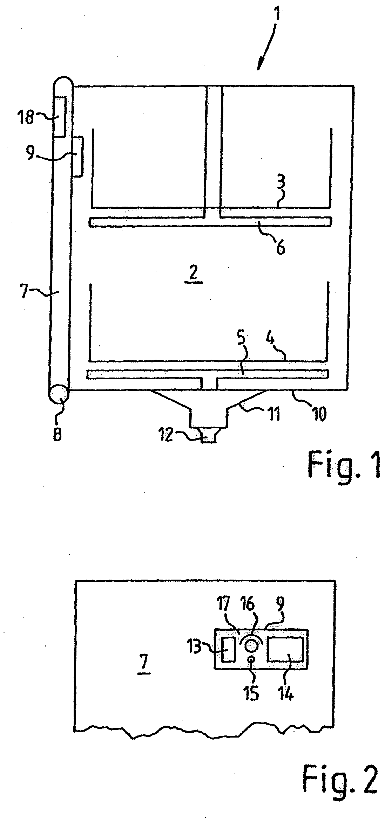

In Figur 1 ist eine Spülmaschine 1 mit Spülkammer 2 schematisch im Schnitt dargestellt. In der Spülkammer 2 befinden sich zwei Geschirrkörbe 3, 4, unterhalb von denen jeweils ein Sprüharm 5, 6 drehbar angeordnet ist.

An einer Vorderseite der Spülkammer 2 ist eine Spülmaschinentür 7 drehbar angebracht, wie durch eine Drehachse 8 angedeutet ist. In der Spülmaschinentür 7 befindet sich eine Dosiervorrichtung 9 zur Spülmittelzugabe.

Im Boden 10 der Spülmaschine 1 befindet sich ein Sumpfbehälter 11, der beispielsweise die üblichen Filter und einen Wasserabfluss 12 beinhaltet.

In Figur 2 ist die Anordnung der Dosiervorrichtung 9 in Draufsicht auf die Tür 7 zu erkennen. Die Dosiervorrichtung 9, ist wie bereits anhand Figur 1 beschrieben, in die Spülmaschinentür 7 eingesetzt. Die Dosiervorrichtung 9 umfasst ein Gehäuseoberteil 20 eines Gehäuses 21 und an ihrer Oberseite in üblicher Weise eine Klappe 14 bzw. Deckel 14 zum Verschluss einer Spülmittelkammer und eine Klappe 13 zum Verschluss einer Klarspülmittelkammer.

Im Inneren der Spülmaschinentür 7 kann auch eine Auswerte- und Steuereinheit 18 bzw. eine Bedieneinheit 18 für den Nutzer/Bediener angeordnet werden, wie in Figur 1 angedeutet. An dem in Figur 1 angedeuteten Ort der Auswerte- und Steuereinheit 18 kann diese unmittelbar mit den zur Bedienung der Maschine erforderlichen Anzeigen, Tasten und sonstigen Bedienungsorganen verbunden werden.

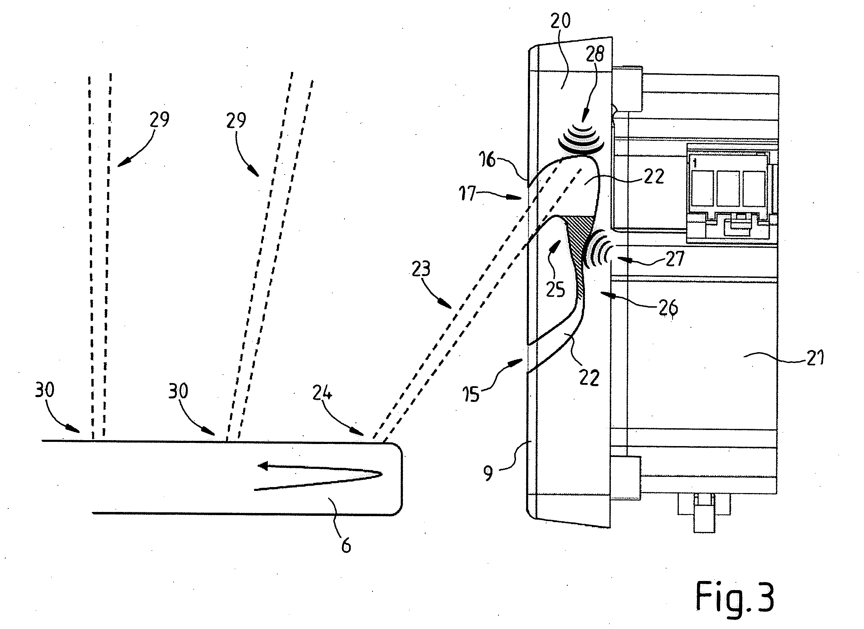

In den Figuren 2 und 3 sind zudem die Anordnung einer Einlassöffnung 17 und einer Ablauföffnung 15 eines erfindungsgemäßen Innenraumes 22 der Dosiervorrichtung 9 veranschaulicht. In Figur 2 ist ein Vordach 16 bzw. eine Abtropfrinne 16 separat über der Einlassöffnung 17 angeordnet. In Figur 3 ist das Vordach 16 bzw. die Abtropfrinne 16 quasi als "Nase" bzw. Ablaufschutz unmittelbar in/mit einem Gehäuseoberteil 20 des Gehäuses 21 integriert/angeformt bzw. als oberer Rand der Einlassöffnung 17 des erfindungsgemäßen Innenraumes 22 der Dosiervorrichtung 9 ausgebildet. Das Vordach 16 dient als Leitelement, um herabrinnendes Wasser oder Lauge umzuleiten.

Wie vor allem in Figur 3 deutlich wird, trifft ein Wasser- bzw. Flüssigkeitsstrahl 23 einer endseitig am rotierenden Sprüharm 5, 6 angeordneten Sprühdüse 24 unmittelbar bzw. direkt durch die Einlassöffnung 17 in den Innenraum 22 der Vorrichtung 9. Andere Wasser- bzw. Flüssigkeitsstrahlen 29 von eher mittig am rotierenden Sprüharm 5, 6 angeordneten Sprühdüsen 30 treffen nicht durch die Einlassöffnung 17 in den Innenraum 22 der Vorrichtung 9 hinein.

Das/die in den Innenraum 22 eingedrungene Wasser/Flüssigkeit/Lauge sammelt sich in einem Staubereich 25, der an seinem unteren Abschnitt eine Drosselstelle 26 bzw. Engstelle 26 aufweist, so dass sich das/die Wasser/Flüssigkeit wie schematisch abgebildet im Innenraum 22 (definiert) sammelt/staut. In Strömungsrichtung "hinter" bzw. "unter" der Engstelle 26 ist ein Ablauf 27 mit der Ablauföffnung 15 des Innenraumes 22 vorgesehen.

Die Engstelle 26 weist einen vorgegebenen lichten/freien Querschnitt auf, so dass durch den vorbei-rotierenden Sprüharm 5, 6 genügend Wasser/Flüssigkeit oberhalb der Engstelle 26 sammelt/anstaut, um mit einem Stausensor 27 oder einem alternativen Sensor 28 das Vorhandensein des/der aufgestauten Wassers/Flüssigkeit im Staubereich 25 zu erfassen. Bevorzugt wird der Sensor 27 im Staubereich 25 angeordnet, der u.a. als Lichtschranke, Drucksensor oder Leitwertsensor ausgebildet ist. Durch den Ablauf bzw. die Auslauföffnung 15 fließt das/die Wasser/Flüssigkeit selbsttätig ab, so dass sich der Staubereich 25 wieder entleert bzw. die Füllhöhe des aufgestauten Wassers/Flüssigkeit wieder sinkt.

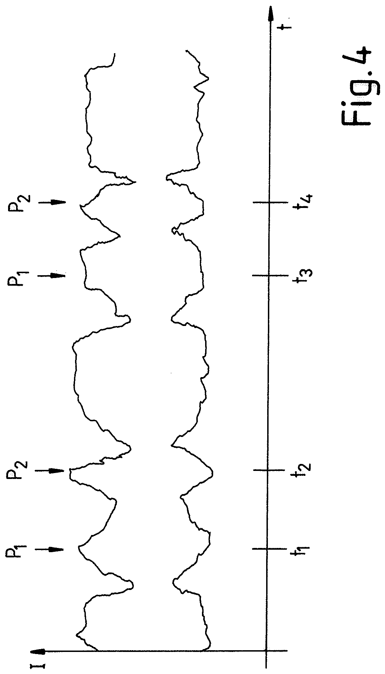

Dieses Aufstauen und wieder Abfließen erfolgt bei einem ordnungsgemäß rotierenden Sprüharm 5, 6 periodisch. In Figur 4 ist schematisch ein beispielhaftes Sensorsignal eines als Leitwertsensor ausgebildeter Sensors 27 abgebildet, wobei eine periodische Signaländerung bzw. jeweils ein Signalpeak P₁ und P₂ aufgrund eines unteren als auch eines oberen Sprüharms 5, 6 erkennbar ist. Bei stehendem bzw. beeinträchtigtem Sprüharm 5, 6 würde der entsprechende Signalpeak P₁ und/oder P₂ fehlen. Dies kann mittels einer vorteilhaften Kontrolleinheit erfasst/ausgewertet und ggf. signalisiert werden.

Der Sensor 28 kann z.B. als Näherungssensor 28 ausgebildet und/oder mittels Abstandsmessung bzw. Niveauerfassung des aufgestauten Volumens bzw. Wassers/Flüssigkeit ebenfalls die Rotation des Sprüharmes 5, 6 erfassen/überwachen.

Grundsätzlich kann mit einem Sensor 27, 28 sowohl eine Rotation des Dreharms 5, 6 als auch in vorteilhafter Weise einen Pumpendruck bzw. Wasser-/Flüssigkeitsdruck erfasst und ausgewertet werden, insb. ist die Höhe bzw. Niveau des Staubereichs 25 und/oder der Abstand zur Oberfläche des aufgestauten Volumens bzw. Wassers/Flüssigkeit ein vorteilhaft auswertbarer Parameter. So ist auch ein Pumpendruck bzw. Druck des Strahls 23 im Wesentlichen proportional zum Sensorsignal P (vgl. Figur 4). Hieraus kann in vorteilhafter Weise ein Rückschluss bzw. eine Überwachung der Pumpe bzw. deren Funktion, insb. ein störungsfreier Betrieb generiert werden.

In Figur 4 ist beispielhaft ein Sensorsignal in seinem Zeitablauf dargestellt. Die horizontale Achse des Diagramms zeigt die Zeit t, während die Vertikalachse die Intensität I darstellt. Das Sensorsignal bzw. eine schematisch dargestellte Hüllkurve des Sensorsignals zeigt verschiedene Peaks P₁ bzw. P₂, die jeweils periodisch über die Zeit t angeordnet sind. Die jeweiligen Zeitpunkte t1 bis t4 sind entsprechend markiert.

Nicht näher dargestellte Störpeaks könnten durch geeignete Auswertung mittels der Auswerteeinheit 18 erkannt und eliminiert werden. Diese Auswertung kann beispielsweise derart ausgestaltet sein, dass nur periodisch wiederkehrende Signale P1 bzw. P2 als echte Sensorsignale, nichtperiodische Signale hingegen als Störsignale wahrgenommen werden. Eine andere Möglichkeit, die Störsignale zu erkennen, besteht beispielsweise darin, die entsprechenden Signalpeaks über die Zeit zu integrieren, wodurch mathematisch die Fläche, die durch die Peaks überdeckt wird, bestimmt wird. Da bei regulären Sensorsignalen ein Integralwert innerhalb eines bestimmten Intervalls zu erwarten ist, können hierdurch anderweitige Signale, wie beispielsweise linienförmige Störsignale erkannt und ausgeschlossen werden.

Diese beispielhaften Methoden oder auch weitere Methoden zur Erkennung von Störsignalen, beispielsweise über Schwellenwerte in der Intensität oder dergleichen, können alleine oder auch in Kombination zueinander Anwendung finden.

Wird auf der Grundlage des Sensorsignals eine Fehlfunktion, beispielsweise ein stehender oder zu langsam drehender Sprüharm erkannt, so kann dies in einer Anzeige bzw. mit der Bedieneinheit 18 der Bedienperson angezeigt werden.

Die erfindungsgemäße Spülmaschine kann auch abhängig vom Sensorsignal gesteuert werden. So kann beispielsweise die Wassermenge und/oder der Pumpendruck variiert werden. Gegebenenfalls sind auch steuerbare Düsen hinsichtlich der Strahlausrichtung und/oder Strahlform denkbar.

### Bezugszeichenliste

- 1: Spülmaschine
- 2: Spülkammer
- 3: Geschirrkorb
- 4: Geschirrkorb
- 5: Sprüharm
- 6: Sprüharm
- 7: Spülmaschinentür
- 8: Drehachse
- 9: Dosiervorrichtung
- 10: Boden
- 11: Sumpfbehälter
- 12: Auslauf
- 13: Klappe
- 14: Klappe
- 15: Auslauföffnung
- 16: Vordach
- 17: Einlassöffnung
- 18: Auswerte- und Steuereinheit
- 20: Gehäuseoberteil
- 21: Gehäuse
- 22: Innenraum
- 23: Wasserstrahl
- 24: Düse
- 25: Staubereich
- 26: Engstelle
- 27: Sensor
- 28: Sensor
- 29: Wasserstrahl
- 30: Düse

- t: Zeit
- I: Intensität
- P1: Peak
- P2: Peak
- t1: Zeitpunkt
- t2: Zeitpunkt
- t3: Zeitpunkt
- t4: Zeitpunkt

## Patentansprüche

1. Geschirrspüler mit einem Arbeitsraum (2), mit wenigstens einem drehbar im Arbeitsraum (2) angeordneten Sprüharm (5, 6) und mit einer Dosiervorrichtung (9) zur Zufuhr und Dosierung eines Stoffes wie Reiniger, Klarspüler, usw. in den Arbeitsraum (2), wobei die Dosiervorrichtung (9) als Einsatzteil (9) mit einem Gehäuse (20, 21) zum Einsetzen in eine Ausnehmung einer Innenwand (7) des Arbeitsraums (2), beispielsweise in der Tür (7) des Arbeitsraums (2), ausgebildet ist, und mit einer Sensoreinheit (27, 28) zur Erkennung einer Sprüharmbewegung im Arbeitsraum (2) des Geschirrspülers, die wenigstens teilweise in einem Gehäuse (20, 21) der Dosiervorrichtung (6) angeordnet ist, **dadurch gekennzeichnet, dass** wenigstens eine Einlassöffnung (17) eines Innenraums (22) der Dosiervorrichtung (9) während der Drehung des Sprüharms (5, 6) wenigstens teilweise im Wasser-/ Flüssigkeitsstrahl (23) einer Sprühdüse (24) des Sprüharms (5, 6) angeordnet ist, wobei die Sensoreinheit (27, 28) wenigstens teilweise im/am Innenraum (22) und/oder an einer Wand des Innenraums (22) angeordnet ist.

2. Geschirrspüler nach Anspruch 1, **dadurch gekennzeichnet, dass** der Innenraum (22) wenigstens eine Ablauföffnung (15) zum Ablaufen/Ausströmen des/der Wassers/Flüssigkeit aufweist.

3. Geschirrspüler nach einem der vorgenannten Ansprüche, **dadurch gekennzeichnet, dass** die Ablauföffnung (15) und/oder der Innenraum (22) wenigstens eine Drosselvorrichtung (26) zum Aufstauen und/oder Drosseln des/der Wassers/Flüssigkeit im Innenraum (22) aufweist.

4. Geschirrspüler nach einem der vorgenannten Ansprüche, **dadurch gekennzeichnet, dass** die Sensoreinheit (27,28) wenigstens einen Leitwertsensor zur Erfassung eines Leitwertes des/der Wasser-/Flüssigkeit umfasst.

5. Geschirrspüler nach einem der vorgenannten Ansprüche, **dadurch gekennzeichnet, dass** die Sensoreinheit (27, 28) wenigstens einen Drucksensor zur Erfassung eines Wasser-/ Flüssigkeitsdruckes umfasst.

6. Geschirrspüler nach einem der vorgenannten Ansprüche, **dadurch gekennzeichnet, dass** die Sensoreinheit (27, 28) wenigstens eine optische Sensorvorrichtung zur Erfassung des/der Wassers/Flüssigkeit umfasst.

7. Geschirrspüler nach einem der vorgenannten Ansprüche, **dadurch gekennzeichnet, dass** das Gehäuse (20, 21) der Dosiervorrichtung (9) Leitelemente (16) aufweist, um den Innenraum (22) und/oder die Sensoreinheit (27, 28) wenigstens teilweise von vom Gehäuse (20, 21) abrinnendem Wasser freizuhalten.

8. Geschirrspüler nach einem der vorgenannten Ansprüche, **dadurch gekennzeichnet, dass** die Leitelemente (16) als Dach (16) über der den Wasser-/Flüssigkeitsstrahl durchlässigen Einlassöffnung (177) und/oder über dem Innenraum (22) ausgebildet sind.

9. Geschirrspüler nach einem der vorgenannten Ansprüche, **dadurch gekennzeichnet, dass** die Sensoreinheit (27, 28) so angeordnet ist, dass sie nicht unmittelbar in einem Wasser-/ Flüssigkeitsstrahl einer Sprüharmdüse (24, 30) liegt.

10. Geschirrspüler nach einem der vorgenannten Ansprüche, **dadurch gekennzeichnet, dass** der Zeitablauf des Sensorsignals erfasst und eine Auswerteeinheit vorgesehen ist, um die Periodizität und/oder Frequenz des vom drehenden Sprüharm (5, 6) hervorgerufenen Sensorsignals zu erfassen.

11. Geschirrspüler nach einem der vorgenannten Ansprüche, **dadurch gekennzeichnet, dass** eine analoge Auswerteschaltung vorgesehen ist.

12. Dosiervorrichtung (9) zur Zufuhr und Dosierung eines Stoffes wie Reiniger, Klarspüler, usw. in einen Arbeitsraum (2) eines Geschirrspülers nach einem der vorgenannten Ansprüche, die als Einsatzteil (9) mit einem Gehäuse (20, 21) zum Einsetzen in eine Ausnehmung einer Innenwand (7) des Arbeitsraums (2), beispielsweise in der Tür (7) des Arbeitsraums (2), ausgebildet ist, und eine Sensoreinheit (27, 28) zur Erkennung einer Sprüharmbewegung im Arbeitsraum (2) des Geschirrspülers umfasst, die wenigstens teilweise in dem Gehäuse (20, 21) angeordnet ist, **dadurch gekennzeichnet, dass** wenigstens eine Einlassöffnung (17) eines Innenraums (22) der Dosiervorrichtung (9) während der Drehung des Sprüharms (5, 6) wenigstens teilweise im Wasser-/Flüssigkeitsstrahl (23) einer Sprühdüse (24) des Sprüharms (5, 6) angeordnet ist, wobei die Sensoreinheit (9) wenigstens teilweise im/am Innenraum (22) und/oder an einer Wand des Innenraums (22) angeordnet ist.
